# FASCICULE DE BREVET EUROPEEN

(11) **EP 0 549 992 B1**
(45) Date de publication et mention de la délivrance du brevet: **08.09.1999**
(21) Numéro de dépôt: 92121760.0
(22) Date de dépôt: 22.12.1992
(51) Int. Cl.: H04L 12/42, H04L 29/14

(54) **Réseau informatique en anneau et procédure de transmission d'informations dans ce réseau**
Datenringnetz und Verfahren zur Übertragung von Daten über das Netz
Data ring network and method of transmission of data via the network

(30) Priorité: 31.12.1991 FR 9116461
(43) Date de publication de la demande: 07.07.1993
(73) Titulaire: The Swatch Group Management Services AG, 2501 Biel (CH)
(72) Inventeur: Clauss, Daniel, CH-5430 Wettingen (CH); Spichiger, Eric, CH-2114 Fleurier (CH)
(74) Mandataire: de Montmollin, Henri

(56) Documents cités:
- EP-A- 0 084 883
- EP-A- 0 091 129
- EP-A- 0 450 879
- GB-A- 2 064 919
- GB-A- 2 064 919
- IBM TECHNICAL DISCLOSURE BULLETIN. vol. 19, no. 10, Mars 1977, NEW YORK US pages 3824 - 3828 G. J. LAURER ET AL. 'AUTOMATIC LOOP RECONFIGURATOR'
- IBM TECHNICAL DISCLOSURE BULLETIN. vol. 29, no. 3, Août 1986, NEW YORK US pages 1144 - 1148 'COMMAND RESPONSE BUS SYSTEM WITH INHERENT FAULT-ISOLATION FEATURES'

## Description

La présente invention a pour objet un réseau informatique en anneau comportant une pluralité d'ordinateurs et des moyens de transmission d'informations reliant lesdits ordinateurs les uns aux autres. Plus particulièrement, la présente invention a pour objet un réseau informatique en anneau monté dans un véhicule automobile et dans lequel chaque ordinateur est destiné à gérer un des divers équipements électriques du véhicule.

La présente invention a également pour objet une procédure de transmission d'informations dans ce réseau.

Des réseaux informatiques en anneau sont décrits dans de nombreux documents.

Ainsi, par exemple, le brevet US-A-4 760 571 décrit un tel réseau dans lequel chaque ordinateur comporte une interface unidirectionnelle ayant deux bornes d'entrée et deux bornes de sortie, et dans lequel les bornes de sortie de chaque interface sont reliées aux bornes d'entrée de l'interface de l'ordinateur suivant par un câble à deux conducteurs. La demande de brevet EP-A-0 084 883 décrit encore un autre réseau informatique en anneau où l'information est transmise d'un ordinateur à l'autre de manière unidirectionnelle.

Dans ce réseau, l'information transmise d'un ordinateur à un autre circule donc toujours dans le même sens. Il en résulte que si le câble reliant deux ordinateurs se rompt, chaque ordinateur du réseau ne peut plus transmettre d'information qu'aux ordinateurs situés après lui par rapport au sens de circulation des informations, et ne peut plus recevoir d'information que des ordinateurs situés avant lui, toujours par rapport au sens de circulation des informations.

Il en est de même si un court-circuit se produit entre les fils de ce câble, ou entre l'un de ces fils et l'un ou l'autre des conducteurs d'alimentation des divers composants du réseau en énergie électrique.

La demande de brevet EP-A-0 332 097 décrit un autre réseau informatique en anneau dans lequel chaque ordinateur comporte une interface bidirectionnelle ayant deux bornes reliées, chacune, à un des fils d'un câble unique à deux fils.

Tous les ordinateurs sont donc reliés en parallèle sur ce câble, de sorte qu'une rupture de celui-ci n'a pas la même conséquence défavorable que dans le réseau du brevet US-A-4 760 571 mentionné ci-dessus. Par contre, un court-circuit entre les fils de ce câble ou entre l'un de ces fils et l'un ou l'autre des conducteurs d'alimentation des divers composants du réseau en énergie électrique interdit complètement tout transfert d'informations de l'un à l'autre des ordinateurs de ce réseau.

La demande de brevet GB 2 064 919 décrit encore un autre réseau informatique en anneau comportant une pluralité d'ordinateurs capables de communiquer de manière bidirectionnelle. Le réseau informatique n'est toutefois pas adapté pour gérer les équipements électriques d'un véhicule automobile.

Un but de la présente invention est de proposer un réseau informatique en anneau qui permet de gérer les différents équipements électriques d'un véhicule automobile et qui ne présente pas les inconvénients des réseaux informatiques connus décrits ci-dessus, c'est-à-dire un réseau dans lequel les informations peuvent être transmises d'un ordinateur à un autre même si la liaison entre deux de ces ordinateurs est interrompue par la rupture du câble qui les relie, que ce câble comporte des fils conducteurs ou des fibres optiques, ou, dans le cas où ce câble comporte des fils conducteurs, si un court-circuit se produit entre deux de ces fils ou entre l'un de ces fils et un conducteur d'alimentation en énergie électrique des composants du réseau.

Afin de répondre à ce but, la présente invention a pour objet un réseau informatique en anneau comportant une pluralité d'ordinateurs et des moyens de transmission d'informations reliant lesdits ordinateurs les uns aux autres, dans lequel :
- chacun desdits ordinateurs comporte une première et une deuxième interface bidirectionnelle de communication,
- lesdits moyens de transmission d'informations comportent une pluralité de segments distincts ayant chacun une première extrémité connectée exclusivement à la première interface de l'un desdits ordinateurs et une deuxième extrémité connectée exclusivement à la deuxième interface d'un autre desdits ordinateurs,
- l'un desdits ordinateurs est programmé de manière à être l'ordinateur maître dudit réseau et les autres desdits ordinateurs sont programmés de manière à être des ordinateurs esclaves de l'ordinateur maître, un premier des ordinateurs esclaves ayant sa deuxième interface connectée à la première interface de l'ordinateur maître par un premier desdits segments, un deuxième des ordinateurs esclaves ayant sa deuxième interface connectée à la première interface du premier ordinateur esclave par un deuxième desdits segments et ainsi de suite jusqu'au dernier des ordinateurs esclaves, ce dernier ayant sa première interface connectée à la deuxième interface de l'ordinateur maître par un dernier desdits,
caractérisé par le fait que le réseau informatique est monté dans un véhicule automobile, chacun des ordinateurs étant associé à un équipement correspondant du véhicule automobile et situé à proximité de cet équipement pour gérer ce dernier, que chacun des ordinateurs comporte, en plus des deux interfaces bidirectionnelles de communication, une interface de conversion de signaux qui est connectée à l'équipement correspondant du véhicule automobile, et par le fait que les interfaces de conversion des ordinateurs sont destinées à convertir des signaux de faible puissance fournis par les ordinateurs dont elles font partie en signaux adaptés à l'équipement correspondant, et/ou à convertir les signaux fournis par les équipements en signaux utilisables par l'ordinateur correspondant.

Grâce à ces caractéristiques, et comme cela sera décrit en détail plus loin, n'importe quel ordinateur du réseau de la présente invention peut toujours transmettre des informations à n'importe quel autre ordinateur de ce réseau, même si le transfert d'informations entre deux ordinateurs adjacents dans le réseau est rendu impossible par une rupture du câble qui les relie ou, si le câble comporte des fils conducteurs électriques, par un court-circuit de l'un de ces fils conducteurs avec un autre ou avec un des conducteurs d'alimentation en énergie électrique des composants du réseau.

Dans les réseaux informatiques en anneau connus, les messages échangés par les ordinateurs sont généralement formés par un certain nombre de mots formés eux-mêmes d'un certain nombre de bits, en général le même pour tous ces mots, et ces bits sont transmis d'un ordinateur à l'autre en série, c'est-à-dire l'un après l'autre.

Certains de ces mots représentent l'information transmise proprement dite, c'est-à-dire l'adresse de l'ordinateur de destination et l'instruction à exécuter par cet ordinateur, ou la quittance de l'exécution d'une instruction.

En plus de ces mots d'information, chaque message comporte en général plusieurs mots de contrôle dont, par exemple, l'un marque le début du message et les autres sont destinés à permettre, à la réception de ce message, de vérifier qu'il n'a pas été modifié accidentellement pendant sa transmission.

La présence dans chaque message de ces mots de contrôle, qui sont pratiquement indispensables et qui comportent souvent, ensemble, plus de bits que n'en comportent les mots d'information de ce message, augmente le temps nécessaire à la transmission de l'information proprement dite, ainsi que le temps pendant lequel un ordinateur doit fonctionner pour élaborer un message qu'il doit transmettre ou pour traiter un message qu'il reçoit.

La vitesse de fonctionnement d'un réseau informatique est donc nettement diminuée par la présence des mots de contrôle dans les messages échangés par les ordinateurs de ce réseau.

Un autre but de la présente invention est de proposer une procédure de transmission d'informations dans la forme d'exécution particulière, mentionnée ci-dessus, du réseau informatique selon la présente invention, qui est nettement plus rapide que les procédures connues.

Afin de répondre à ce but, la présente invention a également pour objet une procédure pour transmettre des informations dans un réseau informatique en anneau comportant une pluralité d'ordinateurs, chacun desdits ordinateurs comportant une première et une deuxième interface bidirectionnelle de communication, l'un desdits ordinateurs étant programmé de manière à être l'ordinateur maître dudit réseau et les autres de manière à être des ordinateurs esclaves de l'ordinateur maître, selon la revendication 1, au moyen de messages d'information, chaque message d'information comprenant autant de mots d'information qu'il y a d'ordinateurs esclaves dans le réseau et chacun des mots d'information étant situé dans ce message d'information à un emplacement particulier correspondant à un ordinateur esclave particulier, cette procédure étant caractérisée par le fait qu'elle comprend les étapes suivantes :
(a) Préparation par l'ordinateur maître d'un premier message d'information dans lequel chacun des mots d'information est un mot d'instruction représentant une instruction qui doit être exécutée par l'ordinateur esclave correspondant à l'emplacement particulier de ce mot d'information; et,
(b) Transmission de ce premier message d'information au premier ordinateur esclave par l'intermédiaire de la première interface de l'ordinateur maître;
ladite procédure comprenant en outre, lorsque l'un quelconque des ordinateurs esclaves reçoit par l'intermédiaire de sa seconde interface un message d'information transmis par l'ordinateur précédant cet ordinateur esclave quelconque, les étapes suivantes :
(c) Exécution par cet ordinateur esclave quelconque de l'instruction représentée par le mot d'instruction situé à l'emplacement correspondant à cet ordinateur esclave quelconque dans le message d'information transmis par l'ordinateur précédent;
(d) Préparation par cet ordinateur esclave quelconque d'un autre message d'information dans lequel le mot d'information situé à l'emplacement correspondant à cet ordinateur esclave quelconque est un mot de réponse représentatif du résultat de l'étape (c) et dans lequel les mots d'information situés aux emplacements correspondant aux autres ordinateurs esclaves sont respectivement identiques aux mots d'information situés aux emplacements correspondant à ces autres ordinateurs esclaves dans le message d'information transmis par cet ordinateur précédent;
(e) Transmission de cet autre message d'information à l'ordinateur suivant cet ordinateur esclave quelconque par l'intermédiaire de la première interface de cet ordinateur esclave quelconque; et,
(f) Transmission d'un dernier message d'information ainsi préparé par le dernier ordinateur esclave à l'ordinateur maître par l'intermédiaire de la première interface de ce dernier ordinateur esclave.

Grâce à cette caractéristique, et comme cela sera décrit en détail plus loin, la transmission des informations dans le réseau est nettement plus rapide que lorsqu'une procédure connue est utilisée.

D'autres caractéristiques et d'autres avantages de la présente invention seront rendus évidents par la description qui va suivre d'une de ses formes d'exécution prise comme exemple non limitatif. Cette description sera faite à l'aide du dessin annexé dans lequel:
- la figure 1 est un schéma-bloc d'un réseau informatique selon l'invention; et
- les figures 2 à 5 illustrent une procédure de transmission d'informations selon l'invention.

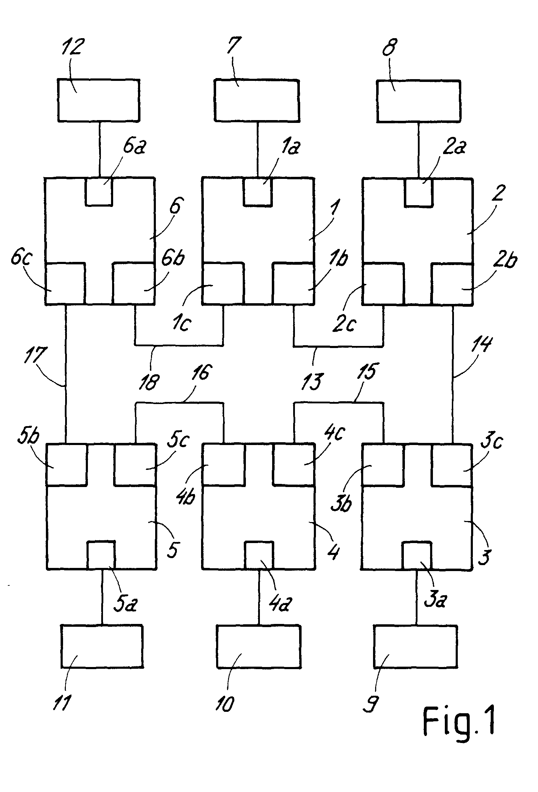

Dans sa forme d'exécution représentée schématiquement et à titre d'exemple non limitatif à la figure 1, le réseau informatique selon la présente invention est monté dans un véhicule automobile.

Ce réseau comporte six ordinateurs, désignés par les références 1 à 6, destinés, chacun, à gérer un des divers équipements électriques du véhicule, désignés par les références 7 à 12.

De manière bien connue, chacun des ordinateurs 1 à 6 est monté à proximité de l'équipement qu'il doit gérer et il comporte une interface de conversion reliée à cet équipement par une liaison symbolisée par un simple trait dans la figure 1 mais qui comporte en réalité plusieurs fils conducteurs isolés les uns des autres.

Ces interfaces de conversion, qui sont désignées par les références 1a à 6a dans la figure 1, sont destinées à convertir les signaux de faible puissance fournis par l'ordinateur dont elles font partie en signaux adaptés à la commande de l'équipement auquel elles sont reliées, et/ou à convertir les signaux fournis par les interrupteurs ou les détecteurs faisant partie de cet équipement en signaux utilisables par cet ordinateur. La constitution de ces interfaces de conversion 1a à 6a dépend évidemment de la nature de l'équipement auquel elles sont reliées. Elles ne seront donc pas décrites plus en détail, leur réalisation ne posant en outre aucun problème particulier à l'homme du métier.

Toujours à titre d'exemple non limitatif, les équipements 7 à 12 peuvent être les suivants:
- équipement 7: les divers dispositifs d'affichage formant le tableau de bord, les divers interrupteurs disposés à portée de main du conducteur du véhicule pour lui permettre d'enclencher ou de déclencher notamment les phares, les clignotants et le chauffage de la vitre arrière du véhicule, et l'interrupteur actionné par la pédale de frein du véhicule pour allumer ou éteindre les feux de stop du véhicule;
- équipement 8: les divers filaments des ampoules disposées à l'avant et à droite du véhicule;
- équipement 9: les divers filaments des ampoules disposées à l'arrière et à droite du véhicule;
- équipement 10: le corps de chauffe de la vitre arrière et un capteur de la température de cette vitre;
- équipement 11: les divers filaments des ampoules disposées à l'arrière et à gauche du véhicule; et
- équipement 12: les divers filaments des ampoules disposées à l'avant et à gauche du véhicule.

Il sera rendu évident par la suite de cette description que le réseau informatique selon la présente invention peut comporter d'autres ordinateurs destinés à gérer d'autres équipements du véhicule tels que les vitres latérales, le toit ouvrant, les serrures, etc.

Les ordinateurs 1 à 6 ne seront pas non plus décrits en détail, car ils peuvent être de n'importe lequel des nombreux types d'ordinateurs disponibles actuellement. En outre, et comme cela sera rendu évident par la suite de cette description, ces ordinateurs 1 à 6 peuvent indifféremment être ou ne pas être tous identiques.

On mentionnera simplement que, comme tous les ordinateurs, ces ordinateurs 1 à 6 comportent des circuits de traitement d'informations qui fonctionnent sous le contrôle d'un programme enregistré dans une mémoire.

Les ordinateurs 1 à 6 présentent cependant tous une caractéristique commune qui est de comporter, chacun, deux interfaces de communication bidirectionnelle, désignées respectivement par les références 1b à 6b et 1c à 6c dans la figure 1.

Un ordinateur comportant deux interfaces de communication bidirectionnelle est commercialisé, par exemple, par la société Hitachi sous la forme d'un circuit intégré désigné par la référence H8/325 ou H8/536 dans les catalogues de cette société.

Les interfaces 1b à 6b et 1c à 6c ne seront pas décrites en détail car il s'agit de dispositifs bien connus qui peuvent être réalisés de diverses manières. On rappellera simplement que chacune des ces interfaces de communication bidirectionnelle est un dispositif électronique capable de transmettre des signaux électriques représentant des informations entre l'ordinateur et l'extérieur de celui-ci, sélectivement dans un sens ou dans l'autre.

Dans la suite de cette description, on appellera arbitrairement première et deuxième interface de l'un des ordinateurs 1 à 6 celle dont la référence comporte la lettre b et, respectivement, celle dont la référence comporte la lettre c. De même, on appellera ordinateur "suivant" d'un ordinateur particulier celui dont la deuxième interface est reliée à la première interface de cet ordinateur particulier, et on appellera ordinateur "précédent" d'un ordinateur particulier celui dont la première interface est reliée à la deuxième interface de cet ordinateur particulier.

Ainsi, dans le cas particulier du réseau informatique de la figure 1, l'ordinateur 1, par exemple, est l'ordinateur suivant l'ordinateur 6 et ce dernier est l'ordinateur précédent de l'ordinateur 1.

Les ordinateurs 1 à 6 sont reliés entre eux par des câbles désignés par les références 13 à 18. Chacun de ces câbles 13 à 18 relie exclusivement la première interface de l'un des ordinateurs 1 à 6 et la deuxième interface d'un autre de ces ordinateurs 1 à 6 de manière que l'ensemble ainsi formé constitue un réseau informatique en anneau.

Ainsi, dans l'exemple de la figure 1, le câble 13 relie la première interface 1b de l'ordinateur 1 et la deuxième interface 2c de l'ordinateur 2, le câble 14 relie la première interface 2b de cet ordinateur 2 et la deuxième interface 3c de l'ordinateur 3, et ainsi de suite jusqu'au dernier câble 18 qui relie la première interface 6b de l'ordinateur 6 et la deuxième interface 1c de l'ordinateur 1.

Les câbles 13 à 18 et leurs moyens de connexion aux interfaces 1b à 6b et 1c à 6c ne seront pas décrits en détail, car leur structure dépend de celle de ces interfaces 1b à 6b et 1c à 6c. On mentionnera simplement que, selon les cas, ces câbles 13 à 18 peuvent comporter par exemple un ou plusieurs conducteurs électriques, ou bien une ou plusieurs fibres optiques.

On voit que dans un réseau informatique en anneau selon la présente invention tel que celui de la figure 1, et grâce au fait que chacun des ordinateurs comporte deux interfaces de communication bidirectionnelle reliées entre elles de la manière décrite, chacun de ces ordinateurs peut normalement communiquer avec n'importe lequel des autres ordinateurs par deux voies différentes.

Ainsi, par exemple, si l'ordinateur 1 de la figure 1 doit envoyer un message à l'ordinateur 4, il peut le faire par la voie qui utilise les câbles 13, 14 et 15 et qui traverse les ordinateurs 2 et 3, ou par la voie qui utilise les câbles 18, 17 et 16 et qui traverse les ordinateurs 6 et 5.

Lorsqu'une procédure classique est utilisée pour transmettre des informations dans ce réseau, tous les ordinateurs de ce réseau sont évidemment programmés de manière que, s'ils reçoivent sur une de leurs interfaces un message qui ne leur est pas destiné, ce qu'ils peuvent reconnaître grâce à l'adresse de l'ordinateur de destination qui est incluse dans ce message, ils transmettent ce message, sans le modifier, à l'ordinateur suivant par l'intermédiaire de leur autre interface.

Toujours dans ce cas, les ordinateurs du réseau sont aussi programmés de manière à n'utiliser, en temps normal, qu'une des deux voies à disposition pour communiquer avec un autre de ces ordinateurs.

Les ordinateurs du réseau sont également programmés de manière que, lorsqu'ils reçoivent d'un autre ordinateur un message contenant, par exemple, une instruction à exécuter, ils envoient à cet autre ordinateur un message de réponse, ou de quittance, indiquant qu'ils ont bien reçu le message d'instruction et, le cas échéant, le résultat de l'exécution de cette instruction.

Chacun des ordinateurs du réseau est en outre programmé de manière que s'il n'a pas reçu de message de réponse un certain temps prédéterminé après avoir envoyé un message d'instruction, ce qui peut se produire si la voie utilisée pour envoyer ce message d'instruction est interrompue à cause, par exemple, d'une défectuosité d'un câble, il envoie le même message d'instruction par l'autre voie à sa disposition.

Après réception de ce message, l'ordinateur auquel il est destiné envoie, par la même voie, son message de réponse.

On voit que dans le réseau informatique en anneau de la présente invention, chaque ordinateur peut transmettre un message à n'importe lequel des autres ordinateurs même si le câble reliant deux de ces ordinateurs est défectueux, et quelle que soit la cause, rupture ou court-circuit, de cette défectuosité, ce qui n'est pas le cas dans les réseaux décrits dans le brevet US-A-4 760 571 ou dans la demande de brevet EP-A-0 332 097 mentionnés ci-dessus.

La sécurité de fonctionnement du réseau informatique en anneau de la présente invention est donc nettement plus grande que celle de ces réseaux connus.

Comme cela a déjà été mentionné, la vitesse de fonctionnement d'un réseau informatique est nettement diminuée par la présence des mots de contrôle dans les messages échangés par les ordinateurs de ce réseau lorsqu'une procédure classique est utilisée pour ces échanges.

Ainsi, par exemple, lorsque le conducteur d'un véhicule équipé d'un réseau informatique tel que celui de la figure 1 actionne l'interrupteur qui commande l'allumage des phares et des feux arrières de ce véhicule et qui fait partie de l'équipement 7 contrôlé par l'ordinateur 1, et si les messages sont échangés entre les ordinateurs de ce réseau de la manière évoquée ci-dessus, l'ordinateur 1 doit successivement élaborer et transmettre quatre messages différents destinés respectivement aux ordinateurs 2, 3, 5 et 6 pour leur commander de provoquer la mise sous tension des filaments voulus dans les ampoules dont ils ont le contrôle, et attendre, après avoir transmis chaque message, que l'ordinateur auquel celui-ci est destiné l'ait traité et ait élaboré et transmis le message de réponse adéquat. En tout, huit messages doivent donc être élaborés, traités et transmis pour que les phares et les feux arrières du véhicule s'allument conformément au désir du conducteur, chacun de ces messages comportant les mots de contrôle mentionnés ci-dessus.

Il faut encore noter que si les ordinateurs d'un réseau informatique en anneau sont capables d'envoyer en tout temps un message à un autre ordinateur, il est nécessaire de les programmer de manière qu'ils puissent vérifier, avant d'envoyer ce message, qu'un autre ordinateur n'est pas en train d'envoyer lui-même un message. Cette vérification, qui est absolument indispensable pour éviter toute collision entre deux messages, diminue encore la vitesse de transmission des informations dans le réseau.

Dans certains cas, un seul des ordinateurs du réseau, qui est alors généralement appelé ordinateur maître, est programmé de manière qu'il puisse envoyer en tout temps un message à n'importe lequel des autres ordinateurs, qui sont, eux, programmés de manière qu'ils ne puissent envoyer un message que à l'ordinateur maître et seulement en réponse à un autre message reçu préalablement de celui-ci. Ces autres ordinateurs sont généralement appelés ordinateurs esclaves.

Lorsque les ordinateurs d'un réseau informatique selon la présente invention sont programmés comme cela vient d'être évoqué, c'est-à-dire que l'un d'entre eux est un ordinateur maître et que les autres sont des ordinateurs esclaves, les informations peuvent être transmises dans ce réseau selon une procédure différente de celle qui a été décrite ci-dessus et qui présente l'avantage d'être nettement plus rapide que cette dernière.

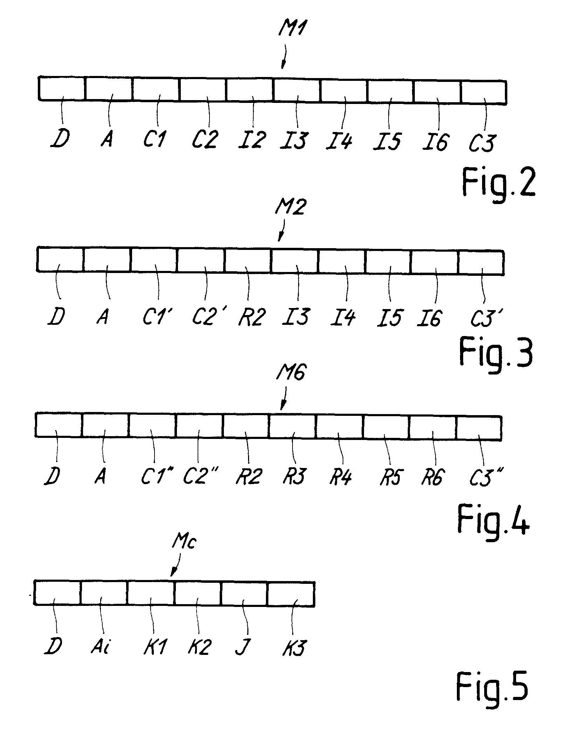

Cette procédure va être décrite à l'aide des figures 2 à 5 dans le cas particulier où elle est appliquée au réseau informatique de la figure 1 et où l'ordinateur 1 de ce réseau est programmé de manière à être l'ordinateur maître de celui-ci, les ordinateurs 2 à 6 étant alors évidemment programmés de manière à être des ordinateurs esclaves.

Dans les figures 2 à 5, chaque grand rectangle symbolise un message élaboré par un ordinateur et transmis à un autre ordinateur comme cela sera précisé plus loin, et chacun des petits rectangles dont la juxtaposition forme ce grand rectangle symbolise un mot de ce message. Les bits formant ces mots ne sont pas représentés dans ces figures 2 à 5.

Comme c'est généralement le cas dans les procédures connues, chaque message échangé entre deux ordinateurs du réseau de la figure 1 selon la présente procédure comporte un certain nombre de mots de contrôle, quatre dans cet exemple.

Un de ces mots, désigné par la référence D dans les figures 2 à 5, a une structure fixe, identique dans tous les messages, et marque le début de chacun de ces derniers.

Les trois autres mots de contrôle de chaque message sont formés par l'ordinateur qui élabore ce message en dépendance, par exemple, du nombre de mots de ce message et/ou du nombre total de bits de ce message qui ont l'une ou l'autre des deux valeurs binaires 0 et 1.

Ces mots de contrôle sont formés en appliquant une règle, qui est de préférence la même pour tous les ordinateurs du réseau et qui ne sera pas décrite ici car elle peut être l'une quelconque des nombreuses règles bien connues des spécialistes.

Chaque message comporte en outre des mots représentant une information qui peut être elle-même une instruction à exécuter par l'ordinateur auquel le message est destiné, ou une réponse, ou quittance, formée par l'ordinateur qui a élaboré le message après qu'il a exécuté une instruction reçue précédemment.

Ces mots représentant une instruction ou une réponse seront appelées mots d'information dans la suite de cette description pour les distinguer des mots de contrôle mentionnés-ci-dessus.

Les instructions représentées par un mot d'instruction peuvent être de deux types différents.

Les unes, qui seront appelées instructions actives, sont destinées à provoquer une modification de l'état de l'équipement contrôlé par l'ordinateur qui les exécute, par exemple l'enclenchement ou le déclenchement de l'un ou de plusieurs des composants de cet équipement. Chacune de ces instructions actives provoque en outre l'élaboration, par l'ordinateur qui l'exécute, d'un mot de réponse représentatif, par exemple, de l'état de l'équipement contrôlé par cet ordinateur au moment où ce mot de réponse est élaboré, c'est-à-dire après l'exécution de cette instruction active.

Les autres instructions, qui seront appelées instruction internes, ne sont pas destinées à provoquer une modification de l'état de l'équipement contrôlé par l'ordinateur qui les exécute, mais simplement à provoquer l'élaboration, par cet ordinateur, d'un mot de réponse également représentatif, par exemple, de l'état de cet équipement au moment où ce mot de réponse est élaboré.

Comme on le verra en détail plus loin, les messages échangés selon la présente procédure par les ordinateurs du réseau peuvent être de deux types.

Les messages du premier type sont caractérisés par le fait qu'ils comportent tous un mot d'information, désigné par la référence A dans les messages représentés aux figures 2 à 4, ayant une structure fixe et identique dans tous les messages.

Les messages du deuxième type comportent, à la place occupée par le mot A dans les messages du premier type, un autre mot d'information, qui peut être différent d'un message à l'autre et qui représente l'adresse de l'ordinateur auquel ce message du deuxième type est destiné. Ce mot d'adresse est désigné par la référence Ai dans la figure 5.

Selon cette procédure, chaque fois que l'ordinateur 1 reçoit de l'équipement 7, par l'intermédiaire de son interface de conversion 1a, un signal indiquant que l'état de l'un ou de plusieurs des dispositifs faisant partie des équipements 8 à 12 doit être modifié, il élabore un message d'un premier type tel que celui qui est symbolisé à la figure 2 avec la référence M1.

Ce message M1 comporte le mot de contrôle D déjà mentionné, et les trois autres mots de contrôle également déjà mentionnés, qui sont désignés par les références C1 à C3, ainsi que le mot d'information A qui a aussi été déjà mentionné.

Ce message M1 comporte en outre cinq mots d'instruction, désignés par les références I2 à I6 et représentant des instructions destinées respectivement aux ordinateurs 2 à 6. Dans la suite de cette description, chaque instruction représentée par un de ces mots I2 à I6 sera désignée par la même référence que ce mot.

Le signal mentionné ci-dessus, en réponse auquel l'ordinateur 1 élabore le message M1, peut provenir, par exemple, de l'interrupteur que le conducteur du véhicule actionne pour enclencher le chauffage de la vitre arrière de ce véhicule. Dans ce cas l'ordinateur 1 élabore le message M1 de manière que l'instruction I4 soit l'instruction active dont l'exécution par l'ordinateur 4, qui contrôle l'équipement 10 dont fait partie le corps de chauffe de cette vitre arrière, est destinée à provoquer la mise sous tension de ce corps de chauffe.

Toujours dans ce cas l'ordinateur 1 élabore en outre le message M1 de manière que les instructions I2, I3, I5 et I6 destinées aux ordinateurs 2, 3, 5 et 6 soient chacune une instruction interne telle que celle qui a été mentionnée ci-dessus.

Toujours par exemple, le signal mentionné ci-dessus peut également provenir de l'interrupteur que le conducteur du véhicule actionne pour allumer les phares de ce véhicule.

Dans ce cas, l'ordinateur 1 élabore le message M1 de manière que les instructions I2, I3, I5 et I6, destinées respectivement aux ordinateurs 2, 3, 5 et 6 contrôlant chacun l'un des équipements 8, 9, 11 et 12 dont font partie les filaments des lampes à allumer, soient les instructions actives dont l'exécution par ces ordinateurs est destinée à provoquer la mise sous tension de ces filaments.

Toujours dans le même cas, l'ordinateur 1 élabore en outre le message M1 de manière que l'instruction I4 soit une instruction interne telle que celle qui a été mentionnée ci-dessus.

Dès que l'ordinateur 1 a élaboré le message M1, il l'envoie à l'ordinateur 2 par l'intermédiaire de sa première interface 1b et du câble 13.

Lorsque l'ordinateur 2 reçoit ce message par l'intermédiaire de sa deuxième interface 2c, il l'enregistre entièrement et commence par vérifier, à l'aide des mots de contrôle C1 à C3, qu'il n'a pas été modifié accidentellement pendant sa transmission.

En outre, l'ordinateur 2 reconnaît, à l'aide du mot d'information A, que le message M1 est un message du premier type.

L'ordinateur 2 exécute ensuite l'instruction I2 du message M1, qui peut être une instruction active ou une instruction interne comme cela a été mentionné ci-dessus.

Dans tous les cas, cette instruction I2 a en outre pour effet que l'ordinateur 2 élabore un nouveau message, également du premier type, symbolisé à la figure 3 avec la référence M2.

Ce message M2 comporte le mot de contrôle D et le mot d'information A, qui sont identiques à ceux du message M1 et situés à la même place que dans ce dernier.

Le message M2 comporte en outre un mot de réponse R2 à la place qui était occupée par le mot I2 dans le message M1. Ce mot de réponse R2 représente une information, destinée à l'ordinateur 1 comme cela sera décrit plus loin, sur l'état de l'équipement 8 au moment où le message M2 est élaboré. Cet état peut avoir été modifié, ou non, suite à l'exécution de l'instruction I2. Si cette instruction I2 était une instruction active et que son exécution n'a pas eu le résultat voulu, le mot de réponse R2 peut contenir une information sur la raison pour laquelle ce résultat n'a pas été atteint, cette raison pouvant être, par exemple, la rupture du filament de la lampe qui devait être mis sous tension en réponse à l'exécution de cette instruction I2.

Les autres mots d'information du message M2 sont identiques aux mots d'instruction I3 à I6 du message M1 et sont disposés dans ce message M2 aux mêmes places que dans ce message M1. Le message M2 comporte en outre trois mots de contrôle, désignés par les références C1' à C3' et situés aux endroits occupés par les mots de contrôle C1 à C3 dans les message M1. Ces mots de contrôle C1' à C3' sont évidemment élaborés par l'ordinateur 2, selon la règle mentionnée ci-dessus, en fonction du contenu des autres mots de ce message M2.

Dès qu'il a élaboré ce message M2, l'ordinateur 2 l'envoie à l'ordinateur 3 par l'intermédiaire de sa première interface 2b et du câble 14.

D'une manière similaire à celle qui vient d'être décrite, chacun des autres ordinateurs 3 à 6, à son tour, enregistre le message qu'il reçoit, par l'intermédiaire de sa deuxième interface, de l'ordinateur précédent , vérifie que ce message n'a pas été modifié accidentellement pendant sa transmission, et exécute l'instruction qui lui est destinée dans ce message.

De même, après avoir exécuté cette instruction, chaque ordinateur 3 à 6 élabore et transmet à l'ordinateur suivant un nouveau message du premier type dans lequel un mot de réponse occupe la place qui était celle de cette instruction dans le message reçu de l'ordinateur précédent.

Le mot de contrôle D et le mot d'information A du nouveau message qui vient d'être mentionné sont identiques aux mots correspondants du message reçu de l'ordinateur précédent. En outre, les autres mots de contrôle de ce nouveau message sont évidemment élaborés, selon la règle mentionnée ci-dessus, en fonction du nouveau mot de réponse introduit dans ce message.

Le message ainsi élaboré par l'ordinateur 6, qui est symbolisé à la figure 4 avec la référence M6, ne comporte donc plus que des mots de réponse, désignés par les références R2 à R6, qui sont les mots de réponse respectivement élaborés de la manière décrite ci-dessus par les ordinateurs 2 à 6. En plus de ces mots de réponse R2 à R6, le message M6 comporte évidemment le mot de contrôle D et le mot d'information A, ainsi que les autres mots de contrôle élaborés par l'ordinateur 6, qui sont désignés par les références C1'' à C3''.

L'ordinateur 6 transmet ce message M6 à l'ordinateur 1 par l'intermédiaire de sa première interface 6b et du câble 18.

Après avoir reçu ce message M6 par l'intermédiaire de sa deuxième interface 1c et après l'avoir enregistré, l'ordinateur 1 vérifie, à l'aide des mots de contrôle C1'' à C3'', que ce message M6 n'a pas été modifié accidentellement pendant sa transmission.

L'ordinateur 1 détermine ensuite, à l'aide des mots de réponse R2 à R6, quel est l'état des équipements 8 à 12 après l'exécution des instructions I2 à I6 qui étaient contenues dans le message M1.

Selon le type de ces instructions et le résultat de cette détermination l'ordinateur 1 exécute l'un ou l'autre de divers programmes qui ne peuvent pas être tous énumérés ici.

Ainsi, par exemple, dans le cas mentionné ci-dessus où le message M1 avait été élaboré en réponse à l'actionnement de l'interrupteur de commande du chauffage de la vitre arrière du véhicule, et si le mot de réponse R4 du message M6 indique que ce chauffage a bien été enclenché en réponse à l'exécution par l'ordinateur 4 de l'instruction I4 du message M1, l'ordinateur 1 peut exécuter un programme provoquant l'allumage d'une lampetémoin signalant cet enclenchement.

Toujours par exemple, si un ou plusieurs des mots de réponse R2 à R6 du message M6 indiquent que l'exécution de l'instruction correspondante n'a pas eu l'effet désiré, l'ordinateur 1 peut exécuter un autre programme qui provoque l'allumage d'une autre lampe-témoin destinée à signaler au conducteur du véhicule que l'un ou plusieurs des équipements 8 à 13 ne fonctionnent pas correctement.

La procédure qui vient d'être décrite peut évidemment être également utilisée, sans changement, dans un cas où l'ordinateur 1 est programmé de manière à élaborer un message tel que le message M1 de la figure 2 non seulement en réponse à un signal provenant de l'équipement 7 mais également, en l'absence d'un tel signal, de manière périodique.

Dans ce dernier cas, les instructions I2 à I6 de ce message M1 sont toutes des instructions internes, et, comme dans le cas décrit ci-dessus, les mots de réponse R2 à R6 du message M6 que l'ordinateur 1 reçoit ensuite de l'ordinateur 6 représentent l'état des équipements 8 à 13 au moment où ces mots de réponse ont été élaborés par les ordinateurs respectifs.

On voit que lorsque la procédure qui vient d'être décrite est utilisée dans un réseau informatique selon la présente invention, tous les messages du premier type élaborés par les ordinateurs de ce réseau et transmis de l'un à l'autre de ces ordinateurs comportent le même nombre de mots. En outre, certains de ces mots, en nombre égal à celui des ordinateurs esclaves du réseau, sont des mots d'information spécifiques, chacun, de l'un de ces ordinateurs esclaves, c'est-à-dire qui représentent, chacun, une instruction destinée à un ordinateur esclave déterminé ou une réponse élaborée par ce dernier.

De plus, chaque mot d'information spécifique de l'un des ordinateurs esclaves occupe toujours la même place dans tous les messages.

Ainsi, dans l'exemple décrit ci-dessus à l'aide des figures 2 à 4, le mot d'information spécifique de l'ordinateur esclave 2 est toujours le cinquième mot du message, le mot spécifique de l'ordinateur esclave 3 est toujours le sixième mot du message, etc,

Ces caractéristiques de cette procédure ont comme conséquence que les mots d'instruction transmis par l'ordinateur maître du réseau à l'un des ordinateurs esclaves n'ont pas besoin d'être accompagnés par un autre mot d'information représentant l'adresse de cet ordinateur esclave, ce qui réduit le nombre de mots qui doivent être élaborés et transmis par cet ordinateur maître.

On voit également que lorsque la procédure qui vient d'être décrite est utilisée dans un réseau informatique selon la présente invention, l'ordinateur maître ne doit élaborer qu'un seul message pour donner des instructions à plusieurs ordinateurs esclaves, ces instructions pouvant d'ailleurs être différentes les unes des autres.

La longueur de ce message unique est évidemment inférieure à la somme des longueurs de tous les messages que l'ordinateur maître devrait élaborer pour transmettre les mêmes instructions séparément à chaque ordinateur esclave en utilisant une procédure classique puisque ces derniers messages doivent comporter, chacun, autant de mots de contrôle que ce message unique.

En outre, toujours selon la présente procédure, les ordinateurs esclaves du réseau ne doivent pas transmettre un message de réponse individuel à l'ordinateur maître après avoir exécuté une instruction.

L'utilisation de la présente procédure, qui est rendue possible par la structure du réseau informatique de la présente invention, permet donc une augmentation importante de la vitesse moyenne de transmission des informations dans ce réseau par rapport à celle qui peut être atteinte en utilisant une procédure classique.

Si cette augmentation de vitesse de transmission des informations n'est pas nécessaire, l'utilisation de la présente procédure permet, le cas échéant, de simplifier les moyens servant directement à cette transmission, c'est-à-dire notamment les câbles qui relient les ordinateurs entre eux et les circuits qui, dans les diverses interfaces de communication, sont connectés à ces câbles, et donc d'en diminuer le prix.

Il est évident que, dans les messages du premier type échangés entre les ordinateurs du réseau selon la présente procédure, l'ordre et/ou le nombre et/ou le rôle des divers mots de contrôle peuvent être différents de ceux qui ont été décrits. De même, l'ordre des divers mots d'instruction ou de réponse dans ces messages peut également être différent de celui qui a été décrit, les seules conditions étant que ces mots d'instruction ou de réponse soient en nombre égal au nombre d'ordinateurs esclaves du réseau et que leur ordre dans ces messages soit fixe et prédéterminé.

Toujours lorsque la présente procédure est utilisée dans un réseau informatique selon la présente invention, si l'ordinateur maître de ce réseau ne reçoit pas de message tel que le message M6 de la figure 4 un certain temps après avoir envoyé à l'ordinateur 2 un message tel que le message M1 de la figure 2, cela signifie que la liaison entre deux ordinateurs de ce réseau est interrompue, par exemple à cause de la rupture d'un des câbles qui relient ces ordinateurs.

L'ordinateur maître du réseau peut alors, par exemple, provoquer l'allumage d'une lampe-témoin sur le tableau de bord du véhicule pour signaler au conducteur de ce dernier que le réseau informatique est défectueux.

De manière avantageuse, cet ordinateur maître peut également initialiser alors une première phase d'une procédure de contrôle qui consiste, pour lui, à élaborer successivement une série de messages du deuxième type mentionné ci-dessus, destinés chacun à l'un des ordinateurs esclaves et semblables à celui qui est symbolisé à la figure 5 avec la référence Mc.

Chacun de ces messages Mc comporte un mot d'information situé à la place occupée par le mot A dans les messages M1, M2 et M6 décrits ci-dessus mais différent de ce dernier et représentant l'adresse de l'ordinateur esclave auquel ce message Mc est destiné. Ce mot d'information sera appelé mot d'adresse dans la suite de cette description et il est désigné par la référence Ai dans la figure 5, le suffixe i étant le numéro de l'ordinateur esclave dont l'adresse est représentée par ce mot Ai.

Chaque message Mc comporte en outre un unique mot d'instruction désigné par la référence J, qui peut être, par exemple, le mot d'instruction qui était destiné, dans le dernier message M1 élaboré par l'ordinateur maître du réseau, à l'ordinateur esclave dont l'adresse est représentée par le mot Ai de ce message Mc.

Enfin chaque message Mc comporte un mot de contrôle D identique aux mots D des messages du premier type décrits ci-dessus, ainsi que des mots de contrôle, désignés par les références K1, K2 et K3 et élaborés selon la même règle que celle qui a été évoquée ci-dessus à propos, par exemple, des mots C1 à C3 du message M1.

Après avoir élaboré un tel message Mc, l'ordinateur 1 le transmet à l'ordinateur 2 par l'intermédiaire de sa première interface 1b et du câble 13.

Si la liaison entre les ordinateurs 1 et 2 n'est pas interrompue, ce dernier reçoit ce message Mc par l'intermédiaire de sa deuxième interface 2c et reconnaît, grâce au mot d'adresse Ai, que ce message Mc est un message du deuxième type et non plus un message du premier type transmis selon la procédure décrite précédemment.

Si en outre le mot d'adresse Ai représente sa propre adresse, l'ordinateur 2 exécute l'instruction J et élabore ensuite un message de réponse également du deuxième type et ayant donc la même structure générale que le message Mc, mais dans lequel le mot d'adresse Ai représente l'adresse de l'ordinateur 1 et qui comporte un mot de réponse adéquat à la place du mot d'instruction J.

Après avoir élaboré ce message de réponse, l'ordinateur 2 le transmet à l'ordinateur 1 par l'intermédiaire de sa deuxième interface 2c, au contraire de ce qui se passe lorsque, après avoir reçu un message tel que le message M1 de la figure 2, il élabore un message tel que le message M2 de la figure 3.

Si le mot d'adresse Ai du message Mc qu'il reçoit ne représente pas sa propre adresse, l'ordinateur 2 transmet ce message Mc à l'ordinateur 3, sans le modifier, par l'intermédiaire de sa première interface 2b et du câble 14.

Si la liaison entre les ordinateurs 2 et 3 n'est pas interrompue, ce dernier reçoit ce message Mc par l'intermédiaire de sa deuxième interface 3c et le transmet à l'ordinateur 4 par l'intermédiaire de sa première interface 3b et du câble 15 si le mot d'adresse Ai ne représente pas sa propre adresse.

Si par contre, ce mot d'adresse Ai représente effectivement sa propre adresse, l'ordinateur 3 élabore un message de réponse, également du deuxième type, dans lequel, notamment, le mot d'adresse Ai représente l'adresse de l'ordinateur 1, et il transmet ce message de réponse à l'ordinateur 2 par l'intermédiaire de sa deuxième interface 3c et du câble 14.

Lorsque l'ordinateur 2 reçoit ce message de réponse par l'intermédiaire de sa première interface 2b, il le retransmet, sans changement, à l'ordinateur 1 par l'intermédiaire de sa deuxième interface 2c et du câble 13.

Un processus analogue se déroule évidemment pour chaque message de contrôle Mc reçu par un des ordinateurs esclaves du réseau par l'intermédiaire de sa deuxième interface pendant cette première phase de la procédure de contrôle, c'est-à-dire que si le mot d'adresse Ai de ce message Mc ne représente pas sa propre adresse, cet ordinateur esclave transmet ce message Mc, sans le modifier, à l'ordinateur esclave suivant par l'intermédiaire de sa première interface, et si ce mot d'adresse Ai représente sa propre adresse, il élabore un message de réponse dont le mot d'adresse représente l'adresse de l'ordinateur maître et transmet ce message de réponse à l'ordinateur précédent par l'intermédiaire de sa deuxième interface. En outre, lorsqu'il reçoit un tel message de réponse par l'intermédiaire de sa première interface, chaque ordinateur esclave du réseau le transmet par l'intermédiaire de sa deuxième interface, sans le modifier, à l'ordinateur précédent.

Lorsque l'ordinateur maître du réseau ne reçoit pas de message de réponse un certain temps après avoir envoyé à un ordinateur esclave un message de contrôle tel que le message Mc, cela signifie que la liaison entre cet ordinateur esclave et le précédent est interrompue.

L'ordinateur maître 1 initialise alors une deuxième phase de la procédure de contrôle, qui consiste, pour lui, à envoyer à nouveau le message de contrôle Mc pour lequel il n'a pas reçu de réponse, mais cette fois-ci à l'ordinateur 6, par l'intermédiaire de sa deuxième interface 1c et du câble 18.

Lorsqu'il reçoit un tel message Mc par l'intermédiaire de sa première interface 6b, l'ordinateur 6 détermine si celui-ci lui est destiné ou non sur la base du mot d'adresse Ai de ce message.

Dans le premier cas, il exécute l'instruction J de ce message Mc, élabore un message de réponse tel que celui qui a été décrit ci-dessus et envoie ce message de réponse à l'ordinateur 1 par l'intermédiaire de sa première interface 6b et du câble 18.

Dans le deuxième cas, il envoie à l'ordinateur 5 le message Mc qu'il a reçu, sans le modifier, par l'intermédiaire de sa deuxième interface 6c et du câble 17.

Un processus analogue se déroule évidemment pour chaque message Mc reçu par un des ordinateurs esclaves du réseau par l'intermédiaire de sa première interface pendant cette deuxième phase de la procédure de contrôle, c'est-à-dire que si le mot d'adresse Ai de ce message Mc ne représente pas sa propre adresse, cet ordinateur esclave transmet ce message Mc, sans le modifier, à l'ordinateur esclave précédent par l'intermédiaire de sa deuxième interface, et si ce mot d'adresse Ai représente sa propre adresse, il élabore un message de réponse dont le mot d'adresse représente l'adresse de l'ordinateur maître et transmet ce message de réponse à l'ordinateur suivant par l'intermédiaire de sa première interface.

En outre, lorsqu'il reçoit un tel message de réponse par l'intermédiaire de sa deuxième interface, chaque ordinateur esclave du réseau le transmet, sans le modifier, à l'ordinateur suivant par l'intermédiaire de sa première interface.

Cette deuxième phase de la procédure de contrôle se termine évidemment lorsque l'ordinateur maître du réseau a reçu un message de réponse de l'ordinateur esclave suivant le dernier ordinateur esclave dont cet ordinateur maître a reçu un message de réponse pendant la première phase de cette procédure de contrôle.

Il est évident que l'ordre dans lequel les divers messages de contrôle sont envoyés aux ordinateurs esclaves pendant l'une ou l'autre des phases de la procédure de contrôle peut être différent de celui qui vient d'être décrit.

On voit que, grâce à l'utilisation de cette procédure de contrôle, l'ordinateur maître du réseau peut transmettre des instructions à tous les ordinateurs esclaves de ce réseau et recevoir des réponses de tous ces ordinateurs esclaves même si la liaison entre deux de ces derniers est interrompue.

## Revendications

1. Réseau informatique en anneau comportant une pluralité d'ordinateurs (1 à 6) et des moyens de transmission d'informations (13 à 18) reliant lesdits ordinateurs (1 à 6) les uns aux autres, dans lequel :
- chacun desdits ordinateurs (1 à 6) comporte une première (1b à 6b) et une deuxième interface bidirectionnelle de communication (1c à 6c),
- lesdits moyens de transmission d'informations (13 à 18) comportent une pluralité de segments distincts ayant chacun une première extrémité connectée exclusivement à la première interface (1b à 6b) de l'un desdits ordinateurs (1 à 6) et une deuxième extrémité connectée exclusivement à la deuxième interface (1c à 6c) d'un autre desdits ordinateurs (1 à 6),
- l'un (1) desdits ordinateurs (1 à 6) est programmé de manière à être l'ordinateur maître (1) dudit réseau et les autres (2 à 6) desdits ordinateurs (1 à 6) sont programmés de manière à être des ordinateurs esclaves (2 à 6) de l'ordinateur maître (1), un premier (2) des ordinateurs esclaves (2 à 6) ayant sa deuxième interface (2c) connectée à la première interface (1b) de l'ordinateur maître (1) par un premier (13) desdits segments (13 à 18), un deuxième (3) des ordinateurs esclaves (2 à 6) ayant sa deuxième interface (3c) connectée à la première interface (2b) du premier ordinateur esclave (2) par un deuxième (14) desdits segments (13 à 18) et ainsi de suite jusqu'au dernier (6) des ordinateurs esclaves (2 à 6), ce dernier (6) ayant sa première interface (6b) connectée à la deuxième interface (1c) de l'ordinateur maître (1) par un dernier (18) desdits segments (13 à 18),
caractérisé par le fait que le réseau informatique est monté dans un véhicule automobile, chacun des ordinateurs (1 à 6) étant associé à un équipement correspondant (7 à 12) du véhicule automobile et situé à proximité de cet équipement pour gérer ce dernier (7 à 12), que chacun des ordinateurs (1 à 6) comporte, en plus des deux interfaces bidirectionnelles de communication (1b, 1c à 6b, 6c), une interface de conversion de signaux (1a à 6a) qui est connectée à l'équipement (7 à 12) correspondant du véhicule automobile, et par le fait que les interfaces de conversion (1a à 6a) des ordinateurs (1 à 6) sont destinées à convertir des signaux de faible puissance fournis par les ordinateurs (1 à 6) dont elles font partie en signaux adaptés à l'équipement (7 à 12) correspondant, et/ou à convertir les signaux fournis par les équipements (7 à 12) en signaux utilisables par l'ordinateur correspondant (1 à 6).

2. Réseau informatique selon la revendication 1, caractérisé par le fait que chacune desdites interfaces de communication bidirectionnelles (1b, 1c à 6b, 6c) est agencée de manière à recevoir ou transmettre sélectivement une information grâce aux moyens de transmission d'information (13 à 18) auxquels elle est connectée.

3. Réseau informatique selon la revendication 2, caractérisé par le fait que chacun desdits segments distincts (13 à 18) ne comporte qu'un seul élément de transmission d'information fait d'un conducteur électrique unique ou d'une fibre optique unique (13 à 18).

4. Procédure pour transmettre des informations dans un réseau informatique en anneau comportant une pluralité d'ordinateurs, chacun desdits ordinateurs comportant une première et une deuxième interface bidirectionnelle de communication, l'un desdits ordinateurs étant programmé de manière à être l'ordinateur maître dudit réseau et les autres de manière à être des ordinateurs esclaves de l'ordinateur maître, selon la revendication 1, au moyen de messages d'information, chaque message d'information comprenant autant de mots d'information qu'il y a d'ordinateurs esclaves dans le réseau et chacun des mots d'information étant situé dans ce message d'information à un emplacement particulier correspondant à un ordinateur esclave particulier, cette procédure étant caractérisée par le fait qu'elle comprend les étapes suivantes :
(a) Préparation par l'ordinateur maître d'un premier message d'information dans lequel chacun des mots d'information est un mot d'instruction représentant une instruction qui doit être exécutée par l'ordinateur esclave correspondant à l'emplacement particulier de ce mot d'information; et,
(b) Transmission de ce premier message d'information au premier ordinateur esclave par l'intermédiaire de la première interface de l'ordinateur maître;
ladite procédure comprenant en outre, lorsque l'un quelconque des ordinateurs esclaves reçoit par l'intermédiaire de sa seconde interface un message d'information transmis par l'ordinateur précédant cet ordinateur esclave quelconque, les étapes suivantes :
(c) Exécution par cet ordinateur esclave quelconque de l'instruction représentée par le mot d'instruction situé à l'emplacement correspondant à cet ordinateur esclave quelconque dans le message d'information transmis par l'ordinateur précédent;
(d) Préparation par cet ordinateur esclave quelconque d'un autre message d'information dans lequel le mot d'information situé à l'emplacement correspondant à cet ordinateur esclave quelconque est un mot de réponse représentatif du résultat de l'étape (c) et dans lequel les mots d'information situés aux emplacements correspondant aux autres ordinateurs esclaves sont respectivement identiques aux mots d'information situés aux emplacements correspondant à ces autres ordinateurs esclaves dans le message d'information transmis par cet ordinateur précédent;
(e) Transmission de cet autre message d'information à l'ordinateur suivant cet ordinateur esclave quelconque par l'intermédiaire de la première interface de cet ordinateur esclave quelconque; et,
(f) Transmission d'un dernier message d'information ainsi préparé par le dernier ordinateur esclave à l'ordinateur maître par l'intermédiaire de la première interface de ce dernier ordinateur esclave.

5. Procédure selon la revendication 4, pour transmettre des informations dans un réseau informatique en anneau selon la revendication 2 dans lequel chaque ordinateur a une adresse spécifique, comprenant en outre une procédure de contrôle qui est initialisée lorsque le dernier message d'information n'est pas reçu par l'ordinateur maître avant la fin d'un intervalle de temps commençant à l'instant où l'étape (b) est exécutée, cette procédure de contrôle comprenant les étapes suivantes :
(g) Préparation par l'ordinateur maître d'un message de contrôle particulier parmi une pluralité de messages de contrôle comprenant chacun un mot d'adresse représentatif de l'adresse de l'un desdits ordinateurs et un desdits mots d'information, le mot d'adresse dans ce message de contrôle particulier étant représentatif de l'adresse d'un ordinateur esclave particulier parmi lesdits ordinateurs esclaves et le mot d'information dans ce message de contrôle particulier étant un mot d'instruction représentatif d'une instruction qui doit être exécutée par cet ordinateur esclave particulier; et,
(h) Transmission de ce message de contrôle particulier au premier ordinateur esclave par l'intermédiaire de la première interface de l'ordinateur maître;
ladite procédure de contrôle comprenant en outre, lorsque l'un quelconque des ordinateurs esclaves reçoit par sa seconde interface un message de contrôle transmis par l'ordinateur précédant cet ordinateur esclave quelconque et que le mot d'adresse dans ce message de contrôle transmis représente l'adresse de cet ordinateur esclave quelconque, les étapes suivantes :
(i) Exécution par cet ordinateur esclave quelconque de l'instruction représentée par le mot d'instruction dans ce message de contrôle transmis;
(j) Préparation par cet ordinateur esclave quelconque d'un autre message de contrôle dans lequel le mot d'adresse représente l'adresse de l'ordinateur maître et le mot d'information est un mot de réponse représentatif du résultat de l'étape (i); et,
(k) Transmission de cet autre message de contrôle par l'intermédiaire de la seconde interface de cet ordinateur esclave quelconque;
cette procédure de contrôle comprenant en outre, lorsque l'un quelconque des ordinateurs esclaves reçoit par sa seconde interface un message de contrôle transmis par l'ordinateur précédant cet ordinateur esclave quelconque et que le mot d'adresse dans ce message de contrôle transmis ne représente pas l'adresse de cet ordinateur esclave quelconque, les étapes suivantes :
(l) Préparation par cet ordinateur esclave quelconque d'un autre message de contrôle dans lequel le mot d'adresse et le mot d'information sont respectivement identiques au mot d'adresse et au mot d'information dans le message de contrôle transmis; et,
(m) Transmission de cet autre message de contrôle par l'intermédiaire de la première interface de cet ordinateur esclave quelconque;
cette procédure de contrôle comprenant en outre, lorsque l'un quelconque des ordinateurs esclaves reçoit par sa première interface un message de contrôle transmis par l'ordinateur suivant cet ordinateur esclave quelconque et que le mot d'adresse dans ce message de contrôle transmis représente l'adresse de l'ordinateur maître, les étapes suivantes :
(n) Préparation par cet ordinateur esclave quelconque d'un autre message de contrôle dans lequel le mot d'adresse et le mot d'information sont respectivement identiques au mot d'adresse et au mot d'information dans ce message de contrôle transmis; et,
(o) Transmission de ce dernier message de contrôle par l'intermédiaire de la deuxième interface de cet ordinateur esclave quelconque;
et cette procédure de contrôle comprenant en outre, lorsque l'ordinateur maître reçoit par sa première interface un message de contrôle, les étapes suivantes :
(p) Préparation par cet ordinateur maître d'un autre message de contrôle particulier dans lequel le mot d'adresse représente l'adresse d'un autre ordinateur esclave particulier et le mot d'information est un mot d'instruction représentatif d'une instruction qui doit être exécutée par cette autre ordinateur esclave particulier; et,
(q) Transmission de cet autre message de contrôle particulier au premier ordinateur esclave par l'intermédiaire de la première interface de l'ordinateur maître.

6. Procédure selon la revendication 5, comprenant en outre une procédure de sécurité qui est initialisée lorsque l'ordinateur maître ne reçoit pas un message de contrôle par l'intermédiaire de sa première interface avant la fin d'un deuxième intervalle de temps commençant à l'instant où l'étape (h) ou l'étape (q) est exécutée, cette procédure de sécurité comprenant les étapes suivantes :
(r) Préparation par l'ordinateur maître d'un message de sécurité particulier parmi une pluralité de messages de sécurité comprenant chacun un mot d'adresse représentatif de l'adresse de l'un des ordinateurs et un mot d'information, le mot d'adresse dans ce message de sécurité particulier étant représentatif de l'adresse d'un ordinateur esclave particulier et le mot d'information dans ce message de sécurité particulier étant un mot d'instruction représentatif d'une instruction qui doit être exécutée par cet ordinateur esclave particulier; et,
(s) Transmission de ce message de sécurité particulier au dernier ordinateur esclave par la seconde interface de l'ordinateur maître;
la procédure de sécurité comprenant en outre, lorsque l'un quelconque des ordinateurs esclaves reçoit par l'intermédiaire de sa première interface un message de sécurité transmis par l'ordinateur suivant cet ordinateur esclave quelconque et que le mot d'adresse dans ce message de sécurité transmis représente l'adresse de cet ordinateur esclave quelconque, les étapes suivantes :
(t) Exécution par cet ordinateur esclave quelconque de l'instruction représentée par le mot d'instruction dans ce message de sécurité transmis;
(u) Préparation par cet ordinateur esclave quelconque d'un autre message de sécurité dans lequel le mot d'adresse représente l'adresse de l'ordinateur maître et le mot d'information est un mot de réponse représentatif du résultat de l'étape (t); et,
(v) Transmission de cet autre message de sécurité par l'intermédiaire de la première interface de cet ordinateur esclave quelconque;
la procédure de sécurité comprenant en outre, lorsque l'un quelconque des ordinateurs esclaves reçoit par l'intermédiaire de sa première interface un message de sécurité transmis par l'ordinateur suivant cet ordinateur esclave quelconque et que le mot d'adresse dans ce message de sécurité transmis ne représente pas l'adresse de cet ordinateur esclave quelconque, les étapes suivantes :
(w) Préparation par cet ordinateur esclave quelconque d'un autre message de sécurité dans lequel le mot d'adresse et le mot d'information sont respectivement identiques au mot d'adresse et au mot d'information dans ce message de sécurité transmis; et,
(x) Transmission de cet autre message de sécurité par l'intermédiaire de la seconde interface de cet ordinateur esclave quelconque;
cette procédure de sécurité comprenant en outre, lorsque l'un quelconque des ordinateurs esclaves reçoit par l'intermédiaire de sa seconde interface un message de sécurité transmis par l'ordinateur précédant cet ordinateur esclave quelconque et que le mot d'adresse dans ce message de sécurité transmis représente l'adresse de l'ordinateur maître, les étapes suivantes :
(y) Préparation par cet ordinateur esclave quelconque d'un autre message de sécurité dans lequel le mot d'adresse et le mot d'information sont respectivement identiques au mot d'adresse et au mot d'information dans ce message de sécurité transmis; et,
(z) Transmission de ce dernier message de sécurité par l'intermédiaire de la première interface de cet ordinateur esclave quelconque;
et cette procédure de sécurité comprenant en outre, lorsque l'ordinateur maître reçoit par l'intermédiaire de sa seconde interface un message de sécurité, les étapes suivantes :
(aa) Préparation par l'ordinateur maître d'un autre message de sécurité particulier dans lequel le mot d'adresse représente l'adresse d'un autre ordinateur esclave particulier et le mot d'information est un mot d'information représentatif d'une instruction qui doit être exécutée par cet autre ordinateur esclave particulier; et,
(ab) Transmission de cet autre message de sécurité particulier au dernier ordinateur esclave par l'intermédiaire de la deuxième interface de l'ordinateur maître.

## Patentansprüche

1. Datenverarbeitungsringnetz, das mehrere Rechner (1 bis 6) und Mittel zur Übertragung von Informationen (13 bis 18), die die Rechner (1 bis 6) miteinander verbinden, umfaßt und in dem:
- jeder der Rechner (1 bis 6) eine erste (1b bis 6b) und eine zweite bidirektionale Kommunikationsschnittstelle (1c bis 6c) umfaßt,
- die Informationsübertragungsmittel (13 bis 18) mehrere verschiedene Segmente umfassen, wovon jedes ein erstes Ende, das ausschließlich mit der ersten Schnittstelle (1b bis 6b) eines der Rechner (1 bis 6) verbunden ist, und ein zweites Ende, das ausschließlich mit der zweiten Schnittstelle (1c bis 6c) eines anderen der Rechner (1 bis 6) verbunden ist, besitzt,
- einer (1) der Rechner (1 bis 6) in der Weise programmiert ist, daß er der Master-Rechner (1) des Netzes ist und die anderen (2 bis 6) der Rechner (1 bis 6) in der Weise programmiert sind, daß sie die Slave-Rechner (2 bis 6) des Master-Rechners (1) sind, wobei ein erster (2) der Slave-Rechner (2 bis 6) mit seiner zweiten Schnittstelle (2c) mit der ersten Schnittstelle (1b) des Master-Rechners (1) über ein erstes (13) der Segmente (13 bis 18) verbunden ist, ein zweiter (3) der Slave-Rechner (2 bis 6) mit seiner zweiten Schnittstelle (3c) mit der ersten Schnittstelle (2b) des ersten Slave-Rechners (2) über ein zweites (14) der Segmente (13 bis 18) verbunden ist und so weiter bis zum letzten (6) der Slave-Rechner (2 bis 6), der mit seiner ersten Schnittstelle (6b) mit der zweiten Schnittstelle (1c) des Master-Rechners (1) über ein letztes (18) der Segmente (13 bis 18) verbunden ist,
dadurch gekennzeichnet, daß das Datenverarbeitungsnetz in einem Kraftfahrzeug angebracht ist, wobei jeder der Rechner (1 bis 6) einer entsprechenden Anlage (7 bis 12) des Kraftfahrzeugs zugeordnet ist und sich in der Nähe dieser Anlage befindet, um diese letztere (7 bis 12) zu steuern, daß jeder der Rechner (1 bis 6) zusätzlich zu den beiden bidirektionalen Kommunikationsschnittstellen (1b, 1c bis 6b, 6c) eine Signalumsetzungsschnittstelle (1a bis 6a) umfaßt, die mit der entsprechenden Anlage (7 bis 12) des Kraftfahrzeugs verbunden ist, und daß die Umsetzungsschnittstellen (1a bis 6a) der Rechner (1 bis 6) dazu vorgesehen sind, Signale mit schwacher Leistung, die von den Rechnern (1 bis 6), wovon sie einen Teil bilden, geliefert werden, in für die entsprechende Anlage (7 bis 12) geeignete Signale umzusetzen und/oder die von den Anlagen (7 bis 12) gelieferten Signale in vom entsprechenden Rechner (1 bis 6) nutzbare Signale umzusetzen.

2. Datenverarbeitungsnetz nach Anspruch 1, dadurch gekennzeichnet, daß jede der bidirektionalen Kommunikationsschnittstellen (1b, 1c bis 6b, 6c) so beschaffen ist, daß sie kraft der Informationsübertragungsmittel (13 bis 18), mit denen sie verbunden ist, wahlweise Informationen empfängt oder sendet.

3. Datenverarbeitungsnetz nach Anspruch 2, dadurch gekennzeichnet, daß jedes der verschiedenen Segmente (13 bis 18) nur ein einziges Informationsübertragungselement umfaßt, das aus einem einzigen elektrischen Leiter oder aus einer einzigen Lichtleitfaser (13 bis 18) hergestellt ist.

4. Verfahren zum Übertragen von Informationen mittels Informationsnachrichten in einem Datenverarbeitungsringnetz nach Anspruch 1, das mehrere Rechner umfaßt, wovon jeder eine erste und eine zweite bidirektionale Kommunikationsschnittstelle umfaßt, wobei einer der Rechner in der Weise programmiert ist, daß er der Master-Rechner des Netzes ist, und die anderen in der Weise programmiert sind, daß sie die Slave-Rechner des Master-Rechners sind, wobei jede Informationsnachricht so viele Informationswörter umfaßt wie Slave-Rechner im Netz vorhanden sind, und jedes der Informationswörter sich in dieser Informationsnachricht an einer besonderen Stelle befindet, die einem besonderen Slave-Rechner entspricht, wobei dieses Verfahren dadurch gekennzeichnet ist, daß sie die folgenden Schritte umfaßt:
(a) Vorbereiten einer ersten Informationsnachricht durch den Master-Rechner, in der jedes der Informationswörter ein Befehlswort ist, das einen Befehl darstellt, der vom Slave-Rechner, der der besonderen Stelle dieses Informationsworts entspricht, ausgeführt werden soll; und
(b) Senden dieser ersten Informationsnachricht zum ersten Slave-Rechner über die erste Schnittstelle des Master-Rechners;
(c) wobei das Verfahren außerdem dann, wenn irgendeiner der Slave-Rechner über die zweite Schnittstelle eine Informationsnachricht empfängt, die von dem diesem beliebigen Slave-Rechner vorhergehenden Rechner gesendet wird, die folgenden Schritte umfaßt:
(c) Ausführen durch diesen Slave-Rechner eines beliebigen Befehls, der durch das Befehlswort repräsentiert wird, das sich an der diesem beliebigen Slave-Rechner entsprechenden Stelle in der vom vorhergehenden Rechner gesendeten Informationsnachricht befindet;
(d) Vorbereiten durch diesen beliebigen Slave-Rechner einer weiteren Informationsnachricht, in der das Informationswort, das sich an der diesem beliebigen Slave-Rechner entsprechenden Stelle befindet, ein Antwort-Wort ist, das das Ergebnis des Schrittes (c) darstellt und in der die Informationswörter, die sich an den den anderen Slave-Rechnern entsprechenden Stellen befinden, jeweils mit den Informationswörtern völlig übereinstimmen, die sich an den entsprechenden Stellen dieser anderen Slave-Rechner in der von diesem vorhergehenden Rechner gesendeten Informationsnachricht befinden;
(e) Senden dieser weiteren Informationsnachricht an den diesem beliebigen Slave-Rechner folgenden Rechner über die erste Schnittstelle dieses beliebigen Slave-Rechners; und
(f) Senden einer letzten Informationsnachricht, die in dieser Weise vorbereitet worden ist, durch den letzten Slave-Rechner zum Master-Rechner über die erste Schnittstelle dieses letzten Slave-Rechners.

5. Verfahren nach Anspruch 4 zum Senden von Informationen in einem Datenverarbeitungsringnetz nach Anspruch 2, in dem jeder Rechner eine spezifische Adresse besitzt, die außerdem eine Steuerprozedur umfaßt, die initialisiert wird, wenn die letzte Informationsnachricht vom Master-Rechner nicht vor dem Ende eines Zeitintervalls empfangen wird, das zu dem Zeitpunkt beginnt, zu dem der Schritt (b) ausgeführt wird, wobei diese Steuerprozedur die folgenden Schritte umfaßt:
(g) Vorbereiten durch den Master-Rechner einer besonderen Steuernachricht aus mehreren Steuernachrichten, die jeweils ein Adressenwort, das die Adresse eines der Rechner repräsentiert, und eines der Informationswörter umfaßt, wobei das Adressenwort in dieser besonderen Steuernachricht die Adresse eines besonderen Slave-Rechners unter den Slave-Rechnern repräsentiert und das Informationswort in dieser besonderen Steuernachricht ein Befehlswort ist, das einen Befehl repräsentiert, der von diesem besonderen Slave-Rechner ausgeführt werden soll; und
(h) Senden dieser besonderen Steuernachricht zum ersten Slave-Rechner über die erste Schnittstelle des Master-Rechners;
wobei die Steuerprozedur außerdem dann, wenn irgendeiner der Slave-Rechner über die zweite Schnittstelle eine von dem diesem beliebigen Slave-Rechner vorhergehenden Rechner gesendete Steuernachricht empfängt und das Adressenwort in dieser gesendeten Steuernachricht die Adresse dieses beliebigen Slave-Rechners repräsentiert, die folgenden Schritte umfaßt:
(i) Ausführen des durch das Befehlswort in dieser gesendeten Steuernachricht repräsentierten Befehls durch diesen beliebigen Slave-Rechner;
(j) Vorbereiten einer weiteren Steuernachricht durch diesen beliebigen Slave-Rechner, in der das Adressenwort die Adresse des Master-Rechners repräsentiert und das Informationswort ein Antwort-Wort ist, das das Ergebnis des Schrittes (i) repräsentiert; und
(k) Senden dieser weiteren Steuernachricht über die zweite Schnittstelle dieses beliebigen Slave-Rechners;
wobei die Steuerprozedur außerdem dann, wenn irgendeiner der Slave-Rechner über die zweite Schnittstelle eine von dem diesem beliebigen Slave-Rechner vorhergehenden Rechner gesendete Steuernachricht empfängt und das Adressenwort in dieser gesendeten Steuernachricht nicht die Adresse dieses beliebigen Slave-Rechnern repräsentiert, die folgenden Schritte umfaßt:
(l) Vorbereiten einer weiteren Steuernachricht durch diesen beliebigen Slave-Rechner, in der das Adressenwort und das Informationswort mit dem Adressenwort bzw. mit dem Informationswort in der gesendeten Steuernachricht völlig übereinstimmen; und
(m) Senden dieser weiteren Steuernachricht über die erste Schnittstelle dieses beliebigen Slave-Rechners;
wobei diese Steuerprozedur außerdem dann, wenn irgendeiner der Slave-Rechner über seine erste Schnittstelle eine von dem diesem beliebigen Slave-Rechner folgenden Rechner gesendete Steuernachricht empfängt und das Adressenwort in dieser gesendeten Steuernachricht die Adresse des Master-Rechners repräsentiert, die folgenden Schritte umfaßt:
(n) Vorbereiten einer weiteren Steuernachricht durch diesen beliebigen Slave-Rechner, in der das Adressenwort und das Informationswort mit dem Adressenwort bzw. mit dem Informationswort in dieser gesendeten Steuernachricht völlig übereinstimmen; und
(o) Senden dieser letzten Steuernachricht über die zweite Schnittstelle dieses beliebigen Slave-Rechners;
und wobei diese Steuerprozedur außerdem dann, wenn der Master-Rechner über seine erste Schnittstelle eine Steuernachricht empfängt, die folgenden Schritte umfaßt:
(p) Vorbereiten einer weiteren besonderen Steuernachricht durch diesen Master-Rechner, in der das Adressenwort die Adresse eines weiteren besonderen Slave-Rechners repräsentiert und das Informationswort ein Befehlswort ist, das einen Befehl repräsentiert, der durch diesen weiteren besonderen Slave-Rechner ausgeführt werden soll; und
(q) Senden dieser weiteren besonderen Steuernachricht an den ersten Slave-Rechner über die erste Schnittstelle des Master-Rechners.

6. Verfahren nach Anspruch 5, die außerdem eine Sicherheitsprozedur umfaßt, die initialisiert wird, wenn der Master-Rechner keine Steuernachricht über seine erste Schnittstelle vor dem Ende eines zweiten Zeitintervalls empfängt, das zu dem Zeitpunkt beginnt, zu dem der Schritt (h) oder der Schritt (q) ausgeführt wird, wobei diese Sicherheitsprozedur die folgenden Schritte umfaßt:
(r) Vorbereiten durch den Master-Rechner einer besonderen Sicherheitsnachricht unter mehreren Sicherheitsnachrichten, die jeweils ein Adressenwort, das die Adresse eines der Rechner repräsentiert, und ein Informationswort umfaßt, wobei das Adressenwort in dieser besonderen Sicherheitsnachricht die Adresse eines besonderen Slave-Rechners repräsentiert und das Informationswort in dieser besonderen Sicherheitsnachricht ein Befehlswort ist, das einen Befehl repräsentiert, der durch diesen besonderen Slave-Rechner ausgeführt werden soll; und
(s) Senden dieser besonderen Sicherheitsnachricht zum letzten Slave-Rechner über die zweite Schnittstelle des Master-Rechners;
wobei die Sicherheitsprozedur außerdem dann, wenn irgendeiner der Slave-Rechner über seine erste Schnittstelle eine von dem diesem beliebigen Slave-Rechner folgenden Rechner gesendete Sicherheitsnachricht empfängt und das Adressenwort in dieser gesendeten Sicherheitsnachricht die Adresse dieses beliebigen Slave-Rechners repräsentiert, die folgenden Schritte umfaßt:
(t) Ausführen des durch das Befehlswort in dieser gesendeten Sicherheitsnachricht repräsentierten Befehls durch diesen beliebigen Slave-Rechner;
(u) Vorbereiten einer weiteren Sicherheitsnachricht durch diesen beliebigen Slave-Rechner, in der das Adressenwort die Adresse des Master-Rechners repräsentiert und das Befehlswort ein Antwort-Wort ist, das das Ergebnis des Schrittes (t) repräsentiert; und
(v) Senden dieser weiteren Sicherheitsnachricht über die erste Schnittstelle dieses beliebigen Slave-Rechners;
wobei die Sicherheitsprozedur außerdem dann, wenn irgendeiner der Slave-Rechner über seine erste Schnittstelle eine von dem diesem beliebigen Slave-Rechner folgenden Rechner gesendete Sicherheitsnachricht empfängt und das Adressenwort in dieser gesendeten Sicherheitsnachricht nicht die Adresse dieses beliebigen Slave-Rechners repräsentiert, die folgenden Schritte umfaßt:
(w) Vorbereiten einer weiteren Sicherheitsnachricht durch diesen beliebigen Slave-Rechner, in der das Adressenwort und das Informationswort mit dem Adressenwort bzw. mit dem Informationswort in dieser gesendeten Sicherheitsnachricht völlig übereinstimmen; und
(x) Senden dieser weiteren Sicherheitsnachricht über die zweite Schnittstelle dieses beliebigen Slave-Rechners;
wobei diese Sicherheitsprozedur außerdem dann, wenn irgendeiner der Slave-Rechner über seine zweite Schnittstelle eine von dem diesem beliebigen Slave-Rechner vorhergehenden Rechner gesendete Sicherheitsnachricht empfängt und das Adressenwort in dieser gesendeten Sicherheitsnachricht die Adresse des Master-Rechners repräsentiert, die folgenden Schritte umfaßt:
(y) Vorbereiten einer weiteren Sicherheitsnachricht durch diesen beliebigen Slave-Rechner, in der das Adressenwort und das Informationswort mit dem Adressenwort bzw. mit dem Informationswort in dieser gesendeten Sicherheitsnachricht völlig übereinstimmen; und
(z) Senden dieser letzten Sicherheitsnachricht über die erste Schnittstelle dieses beliebigen Slave-Rechners;
und wobei diese Sicherheitsprozedur außerdem dann, wenn der Master-Rechner über seine zweite Schnittstelle eine Sicherheitsnachricht empfängt, die folgenden Schritte umfaßt:
(aa) Vorbereiten einer weiteren besonderen Sicherheitsnachricht durch den Master-Rechner, in der das Adressenwort die Adresse eines weiteren besonderen Slave-Rechners repräsentiert und das Informationswort ein Informationswort ist, das einen Befehl repräsentiert, der von diesem weiteren besonderen Slave-Rechner ausgeführt werden soll; und
(ab) Senden dieser weiteren besonderen Sicherheitsnachricht zum letzten Slave-Rechner über die zweite Schnittstelle des Master-Rechners.

## Claims

1. Ring computing network comprising a plurality of computers (1 to 6) and information transmission means (13 to 18) connecting said computers (1 to 6) to one another, wherein :
- each of said computers (1 to 6) comprises a first (1b to 6b) and a second (1c to 6c) bidirectional communication interface,
- said information transmission means (13 to 18) comprise a plurality of separate segments having each a first end which is exclusively connected to the first interface (1b to 6b) of one of said computers (1 to 6) and a second end which is exclusively connected to the second interface (1c to 6c) of another of said computers (1 to 6),
- one (1) of said computers (1 to 6) is programmed to be the master computer (1) of said network and the others (2 to 6) of said computers (1 to 6) are programmed to be slave computers (2 to 6) of the master computer (1), a first (2) of the slave computers (2 to 6) having its second interface (2c) connected to the first interface (1b) of the master computer (1) by a first (13) of said segments (13 to 18), a second (3) of the slave computers (2 to 6) having its second interface (3c) connected to the first interface (2b) of the first slave computer (2) by a second (14) of said segments (13 to 18) and so on until the last (6) of the slave computers (2 to 6), this latter computer (6) having its first interface (6b) connected to the second interface (1c) of the master computer (1) by a last one (18) of said segments (13 to 18),
characterized by the fact that the computing network is mounted in an automobile vehicle, each of the computers (1 to 6) being associated with a corresponding equipment (7 to 12) of the automobile vehicle and situated in proximity to this equipment in order to manage this latter equipment (7 to 12), by the fact that each of the computers (1 to 6) comprises, in addition to the two bidirectional communication interfaces (1b, 1c to 6b, 6c), a signal conversion interface (1a to 6a) which is connected to the corresponding equipment (7 to 12) of the automobile vehicle, and by the fact that the signal conversion interfaces (1a to 6a) of the computers (1 to 6) are intended to convert low power signals supplied by the computers (1 to 6) of which they form part into signals adapted to the corresponding equipment (7 to 12), and/or to convert the signals supplied by the equipments (7 to 12) into signals that may be used by the corresponding computer (1 to 6).

2. Computing network according to claim 1, characterized by the fact that each of said bidirectional communication interfaces (1b, 1c to 6b, 6c) is arranged so as to selectively receive or transmit an information thanks to the information transmission means (13 to 18) to which it is connected.

3. Computing network according to claim 2, characterized by the fact that each of said separate segments (13 to 18) includes only one information transmission element made of a single electrical conductor or a single optical fibre (13 to 18).

4. Procedure for transmitting information in a ring computing network comprising a plurality of computers, each of said computers comprising a first and a second bidirectional communication interface, one of said computers being programmed to be the master computer of said network and the others to be slave computers of said master computer, according to claim 1, by means of information messages, each information message comprising as many information words as there are slave computers in the network and each of the information words being located in this information message at a particular place corresponding to a particular slave computer, this procedure being characterized by the fact that it comprises the following steps :
(a) Preparation by the master computer of a first information message in which each of the information words is an instruction word representing an instruction intended to be executed by the slave computer corresponding to the particular place of this information word; and,
(b) Transmission of this first information message to the first slave computer via the first interface of the master computer;
said procedure further comprising, when any one of said slave computers receives via its second interface an information message transmitted by the computer preceding this any slave computer, the following steps :
(c) Execution by this any slave computer of the instruction represented by the instruction word located at the place corresponding to this any slave computer in the information message transmitted by the preceding computer;
(d) Preparation by this any slave computer of another information message in which the instruction word located at the place corresponding to this any slave computer is a response word representative of the result of step (c) and in which the information words located at the places corresponding to the other slave computers are respectively identical to the information words located at the places corresponding to these other slave computers in the information message transmitted by this preceding computer;
(e) Transmission of this other information message to the computer following this any slave computer via the first interface of this any slave computer; and,
(f) Transmission of a last information message thus prepared by the last slave computer to the master computer via the first interface of this last slave computer.

5. Procedure according to claim 4, for transmitting information in a ring computing network according to claim 2, wherein each computer has a specific address, further comprising a checking procedure which is initialized when the last information message is not received by the master computer before the end of an interval of time beginning at the time when step (b) is executed, this checking procedure comprising the following steps :
(g) Preparation by the master computer of a particular control message among a plurality of control messages each comprising an address word representative of the address of one of said computers and an information word, the address word in this particular control message being representative of the address of a particular slave computer among said slave computers and the information word in this particular control message being an instruction word representative of an instruction which is intended to be executed by this particular slave computer; and,
(h) Transmission of this particular control message to the first slave computer via the first interface of the master computer;
said checking procedure further comprising, when any one of the slave computers receives via its second interface a control message transmitted by the computer preceding this any slave computer and when the address word in this transmitted control message represents the address of this any slave computer, the following steps :
(i) Execution by this any slave computer of the instruction represented by the instruction word in this transmitted control message;
(j) Preparation by this any slave computer of another control message in which the address word represents the address of the master computer and the information word is a response word representative of the result of step (i); and,
(k) Transmission of this other control message via the second interface of this any slave computer;
this checking procedure further comprising, when any one of the slave computers receives via its second interface a control message transmitted by the computer preceding this any slave computer and when the address word in this transmitted control message does not represent the address of this any slave computer, the following steps :
(l) Preparation by this any slave computer of another control message in which the address word and the information word are respectively identical to the address word and the information word in the transmitted control message; and,
(m) Transmission of this other control message via the first interface of this any slave computer;
this checking procedure further comprising, when any one of the slave computers receives via its first interface a control message transmitted by the computer following this any slave computer and when the address word in this transmitted control message represents the address of the master computer, the following steps :
(n) Preparation by this any slave computer of another control message in which the address word and the information word are respectively identical to the address word and the information word in this transmitted control message; and,
(o) Transmission of this last control message via the second interface of this any slave computer;
and this checking procedure further comprising, when the master computer receives a control message via its first interface, the following steps :
(p) Preparation by this master computer of another particular control message in which the address word represents the address of another particular slave computer and the information word is an instruction word representative of an instruction which is intended to be executed by this other particular slave computer; and,
(q) Transmission of this other particular control message to the first slave computer via the first interface of the master computer.

6. Procedure according to claim 5, further comprising a security procedure which is initialized when the master computer does not receive a control message via its first interface before the end of a second interval of time beginning at the time when step (h) or step (q) is executed, this security procedure comprising the following steps :
(r) Preparation by the master computer of a particular security message among a plurality of security messages each comprising an address word representative of the address of one of the computers and an information word, the address word in this particular security message being representative of the address of a particular slave computer and the information word in this particular security message being an instruction word representative of an instruction which is intended to be executed by this particular slave computer; and,
(s) Transmission of this particular security message to the last slave computer via the second interface of the master computer;
the security procedure further comprising, when any one of the slave computers receives via its first interface a security message transmitted by the computer following this any slave computer and when the address word in this transmitted security message represents the address of this any slave computer, the following steps :
(t) Execution by this any slave computer of the instruction represented by the instruction word in this transmitted security message;
(u) Preparation by this any slave computer of another security message in which the address word represents the address of the master computer and the information word is a response word representative of the result of step (t); and,
(v) Transmission of this other security message via the first interface of this any slave computer;
the security procedure further comprising, when any one of the slave computers receives via its first interface a security message transmitted by the computer following this any slave computer and when the address word in this transmitted security message does not represent the address of this any slave computer, the following steps :
(w) Preparation by this any slave computer of another security message in which the address word and the information word are respectively identical to the address word and the information word in the transmitted security message; and,
(x) Transmission of this other security message via the second interface of this any slave computer;
this security procedure further comprising, when any one of the slave computers receives via its second interface a security message transmitted by the computer preceding this any slave computer, and when the address word in this transmitted security message represents the address of the master computer, the following steps :
(y) Preparation by this any slave computer of another security message in which the address word and the information word are respectively identical to the address word and the information word in this transmitted security message; and,
(z) Transmission of this last security message via the first interface of this any slave computer;
and this security procedure further comprising, when the master computer receives a security message via its second interface, the following steps :
(aa) Preparation by the master computer of another particular security message in which the address word represents the address of another particular slave computer and the information word is an instruction word representative of an instruction which is intended to be executed by this other particular slave computer; and,
(ab) Transmission of this other particular security message to the last slave computer via the second interface of the master computer.
